# EUROPÄISCHE PATENTANMELDUNG

(11) **EP 4 764 201 A1**
(43) Veröffentlichungstag der Anmeldung: **24.06.2026**
(21) Anmeldenummer: 25216811.7
(22) Anmeldetag: 19.11.2025
(51) Int. Cl.: F03D 1/00, F03D 15/00

(54) **BEFESTIGUNGSANORDNUNG UND WINDKRAFTANLAGE**

(30) Priorität: 17.12.2024 DE 102024212029
(71) Anmelder: ZF Friedrichshafen AG, 88046 Friedrichshafen (DE); ZF Wind Power Antwerpen N.V., 3920 Lommel (DE)
(72) Erfinder: Patel, Priyangu, 88046 Friedrichshafen (DE); De Laet, Wim, 2000 Antwerpen (BE)
(74) Vertreter: ZF Friedrichshafen AG

(57) **Zusammenfassung**

Die Erfindung betrifft eine Befestigungsanordnung zum Befestigen eines Antriebsstrangs an einer Windkraftanlage (10). Die Befestigungsanordnung weist ein Gehäuse (40) auf, in welchem wenigstens ein Lager zum drehbaren Lagern einer Rotorwelle (16) der Windkraftanlage (10) befestigbar ist. Das Gehäuse (40) ist zum Befestigen an einer Gondel (20) der Windkraftanlage (10) ausgebildet. Das Gehäuse (40) ist wenigstens einfach axial geteilt ausgebildet. Das Gehäuse (40) weist ein erstes Teilstück (60) und ein zweites Teilstück (62) auf, welche aneinander befestigt sind. Zudem betrifft die Erfindung eine Windkraftanalage.

## Beschreibung

Die vorliegende Erfindung bezieht sich auf eine Befestigungsanordnung für einen Antriebsstrang einer Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben.

Ein Antriebsstrang der Windkraftanlage, welcher wenigstens die Rotorwelle aufweist, muss im Betrieb an der restlichen Windkraftanlage abgestützt werden. Beispielsweise ist der Antriebsstrang an einer Gondel der Windkraftanlage befestigt. Diese Befestigung kann jedoch sehr komplex sein und viele Teile benötigen. Alternativ kann auch eine Befestigung nur über ein einziges Gehäuse erfolgen. Dieses Gehäuse kann dann jedoch so groß und schwer sein, dass ein Transport zum Aufstellungsort der Windkraftanlage und eine Montage nur mit großem Aufwand oder gar nicht mehr möglich ist.

### Darstellung der Erfindung

Ein erster Aspekt betrifft eine Befestigungsanordnung zum Befestigen eines Antriebsstrangs an einer Windkraftanlage. Die Windkraftanlage kann einen Turm und eine daran angeordnete Gondel aufweisen. Der Turm erstreckt sich beispielsweise mit seiner Längserstreckung in eine vertikale Richtung. Die Gondel kann beispielsweise drehbar oder drehfest an dem Turm gelagert sein. Die Gondel kann beispielsweise oberseitig an dem Turm angeordnet sein. Der Turm kann beispielsweise hohl ausgebildet sein. Der Turm kann sich zu seinem oberen Ende hin verjüngen. Der Turm kann auch zylindrisch sein. Der Turm kann einen runden, ovalen oder eckigen Querschnitt aufweisen. Der Turm kann beispielsweise aus mehreren aufeinander gestapelten Turmelementen gebildet sein. Der Turm kann beispielsweise Stahl und alternativ oder zusätzlich Beton als Werkstoff aufweisen.

Die Windkraftanlage kann beispielsweise einen Rotor, ein Getriebe und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor, das Getriebe und der Generator können beispielsweise an einer Gondel der Windkraftanlage befestigt sein, beispielsweise gemeinsam durch eine Hauptlagerung. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind. Der Antriebsstrang weist wenigstens die Rotorwelle auf. Die Rotorwelle, das Getriebe und der Generator können beispielsweise Teile des Antriebsstrangs sein. Der Antriebsstrang kann optional auch den Rotor und alternativ oder zusätzlich die Bremse aufweisen.

Die Befestigungsanordnung weist ein Gehäuse auf. In dem Gehäuse kann wenigstens ein Lager zum drehbaren Lagern der Rotorwelle der Windkraftanlage befestigbar sein. In dem Gehäuse können auch zwei Lager zum Lagern der Rotorwelle angeordnet sein. Sofern nur ein Lager vorgesehen ist, kann die Rotorwelle über ein weiteres Lager in einer anderen Komponente des Antriebsstrangs gelagert sein, wie in einem Getriebegehäuse. Sofern zwei Lager in dem Gehäuse zum Lagern der Rotorwelle vorgesehen sind, kann der Antriebsstrang frei von weiteren Lagern für die Rotorwelle in anderen Komponenten des Antriebsstrangs sein. Die Lager können Teil der Befestigungsanordnung bilden oder dazu separat sein. Das Gehäuse ist zum Befestigen an einer Gondel der Windkraftanlage ausgebildet. Dafür kann das Gehäuse Befestigungsschnittstellen aufweisen. Das Gehäuse kann an der Gondel befestigt sein, beispielsweise durch eine Verschraubung mit einem Maschinenbett. Die Lager können beispielsweise als Wälzlager ausgebildet sein. Geeignete Lager sind beispielsweise Kegelrollenlager. Alternativ können die Lager beispielsweise auch Kugelrollenlager, Zylinderrollenlager, Toroidlager oder Gleitlager sein. So kann die Rotorwelle an der Gondel gestützt werden. Die Gondel kann beispielsweise das Maschinenbett aufweisen, an welchem der Antriebsstrang befestigt ist. Das Gehäuse und das eine Lager sowie das optionale zweite Lager in dem Gehäuse können eine Hauptlagerung des Antriebsstrangs ausbilden. Die Windkraftanlage kann frei von weiteren Lagern sein, über welche der Antriebsstrang an der Gondel der Windkraftanlage abstützbar ist. Die Hauptlagerung kann frei von weiteren Lagern sein. Die Rotorwelle kann nur über die Hauptlagerung an der Gondel gelagert sein. Das Getriebe kann beispielsweise ebenfalls nur über die Hauptlagerung an der Gondel gelagert sein. Dann sind beispielsweise stationäre Bauteile des Gehäuses, wie ein Getriebegehäuse, an dem Gehäuse befestigt. Wenigstens ein drehbares Teil, wie eine Eingangswelle des Getriebes, kann über die Rotorwelle an den beiden Lagern gelagert sein. Optional kann auch der Generator nur über die Hauptlagerung an der Gondel gelagert sein, beispielsweise mittelbar über das Getriebe.

Ein erstes der beiden Lager kann axial in einem rotorseitigen Endbereich des Gehäuses angeordnet sein. Das erste Lager bildet beispielsweise ein rotorseitiges Lager. Ein zweites der beiden Lager kann axial in einem generatorseitigen Endbereich des Gehäuses angeordnet sein. Das zweite Lager bildet beispielsweise ein generatorseitiges Lager. Die beiden Lager können axial zueinander beabstandet sein. Die beiden Lager können koaxial angeordnet sein. In dem Axialbereich, in welchem die beiden Lager angeordnet sind, kann das Gehäuse jeweils verdickt und alternativ oder zusätzlich versteift ausgebildet sein. Das Gehäuse kann einen geschlossenen umlaufenden Ringbereich in dem Axialbereich aufweisen, in welchem die beiden Lager jeweils angeordnet sind. Die axiale Richtung, eine radiale Richtung und eine Umfangsrichtung kann durch die Drehachse der Rotorwelle und alternativ oder zusätzlich durch die Drehachse der jeweiligen Lager definiert sein. Die beiden Lager können beispielsweise jeweils mit einer Lospassung, Übergangspassung oder Presspassung mit einem Außenring in dem Gehäuse befestigt sein. Die beiden Lager können beispielsweise jeweils mit einer Lospassung, Übergangspassung oder Presspassung mit einem Innenring an der Rotorwelle befestigt sein.

Das Gehäuse ist wenigstens einfach axial geteilt ausgebildet. Das Gehäuse kann beispielsweise einfach, zweifach oder dreifach axial geteilt sein. Das Gehäuse ist somit mehrteilig ausgebildet. Das Gehäuse kann also beispielsweise einen axialen Schnitt aufweisen, welcher sich in einer Ebene orthogonal zu der Drehachse der Rotorwelle erstreckt. Das Gehäuse kann ein Gußbauteil oder auch ein Schmiedeteil sein. Das Gehäuse kann beispielsweise eine zylindrische oder konische Grundform aufweisen.

Das Gehäuse bildet ein erstes Teilstück und ein zweites Teilstück aus, beispielsweise aufgrund der axialen Teilung. Die beiden Teilstücke sind aneinander befestigt. Sofern mehr als zwei Teilstücke aufgrund einer mehr als einfachen axialen Teilung vorgesehen sind, können immer zwei axial benachbarte Teilstücke paarweise aneinander befestigt sein. Jedes Teilstück kann einen axialen Teilbereich eines Innenraums des Gehäuses begrenzen. Jedes der beiden Teilstücke kann einstückig ausgebildet sein. Jedes Teilstück kann eine Oberschale und eine Unterschale aufweisen. Die Teilstücke können mit Befestigungsmitteln miteinander verbunden sein, beispielsweise durch Schrauben, Nieten oder Bolzen. Die Teilung kann axial in der Mitte des Gehäuses sein. Die beiden Teilstücke können direkt aneinander angrenzen und miteinander verbunden sein. Die beiden Teilstücke können auch indirekt miteinander verbunden sein, beispielsweise über ein weiteres Teilstück. Das Gehäuse kann aus exakt zwei Teilstücken gebildet sein. Das erste Teilstück und das zweite Teilstück können axiale Endstücke des Gehäuses ausbilden. Die beiden Teilstücke können an axial gegenüberliegenden Endbereichen des Gehäuses angeordnet sein. Die beiden Teilstücke können eine zylindrische Grundform aufweisen. Die beiden Teilstücke können sich in eine axiale Richtung verjüngen, beispielsweise konisch oder stufenweise.

Durch die wenigstens einfach axial geteilte Gestaltung des Gehäuses kann das Gehäuse einfacher zu transportieren sein. Beispielsweise können die beiden Teilstücke separat jeweils durch einen Tieflader transportiert werden. Die beiden Teilstücke können dazu ausgebildet sein, erst an einem Aufstellungsort der Windkraftanlage aneinander befestigt zu werden. Die beiden Teilstücke können auch dazu ausgebildet sein, erst in der Gondel aneinander befestigt zu werden. Dann kann eine Montage einfach sein. Zudem kann auch eine Fertigung einfacher sein. Beispielsweise kann ein Gießen von zwei Teilstücken einfacher und kostengünstiger sein als von einem einteiligen Gehäuse. So können auch sehr leistungsstarke Windkraftanlagen an schwer zugänglichen Standorten kostentragend sein.

In einer Ausführungsform der Befestigungsanordnung kann es vorgesehen sein, dass der Antriebsstrang ausschließlich über das Gehäuse an der Gondel der Windkraftanlage gehalten ist. Beispielsweise kann keine andere Komponente des Antriebsstrangs, wie ein Getriebegehäuse oder Generatorgehäuse, in einer lasttragenden Art und Weise unabhängig von dem Gehäuse mit der Gondel verbunden sein.

In einer Ausführungsform der Befestigungsanordnung kann es vorgesehen sein, dass das Gehäuse wenigstens zweifach axial geteilt ausgebildet ist. Das Gehäuse kann zusätzlich ein drittes Teilstück ausbilden. Das erste Teilstück kann über das dritte Teilstück an dem zweiten Teilstück befestigt sein. Das Gehäuse kann exakt zweifach geteilt sein. Das erste und das dritte Teilstück sowie das zweite und das dritte Teilstück können direkt aneinander befestigt sein, beispielsweise ohne weitere dazwischen angeordnete Stücke. Beispielsweise kann das Gehäuse axial gedrittelt sein. Das erste Teilstück kann an dem dritten Teilstück befestigt sein, beispielsweise auf einer Rotorseite des dritten Teilstücks. Das zweite Teilstück kann an dem dritten Teilstück befestigt sein, beispielsweise auf einer Generatorseite des dritten Teilstücks. Die Rotorseite und die Generatorseite können axial gegenüberliegend sein. Die Teilstücke können beispielsweise an Stirnflächen aneinander anliegen. Das dritte Teilstück kann axial zwischen dem ersten und zweiten Teilstück angeordnet sein. Das dritte Teilstück kann ein axiales Mittelstück und alternativ oder zusätzlich ein Verbindungsstück ausbilden. Das dritte Teilstück kann eine zylindrische Grundform aufweisen. Das dritte Teilstück kann sich konisch oder stufenweise hin zu einem Ende verjüngen. In dem ersten Teilstück kann das erste Lager für die Rotorwelle angeordnet sein. In dem zweiten Teilstück kann das zweite Lager für die Rotorwelle angeordnet sein. Das dritte Teilstück kann frei von einem darin angeordneten Lager sein. Die zweifache Teilung ermöglicht einen sehr kompakten Transport. Zudem kann ein modularer Aufbau ermöglicht werden, in welchen die Teilstücke zur Aufnahme von Lagern und eine axiale Länge zwischen den Lagern flexibel gestaltet werden kann. Das Gehäuse kann auch dreifach oder noch öfter axial geteilt ausgebildet sein.

In einer Ausführungsform der Befestigungsanordnung kann es vorgesehen sein, dass das dritte Teilstück in seiner umlaufenden Wand wenigstens eine radiale Durchgangsöffnung aufweist. Die Durchgangsöffnung kann eine Zugangsöffnung für eine Montage der Teilstücke aneinander bilden, beispielsweise sofern die Verbindung von Teilstücken innerhalb des Gehäuses erfolgt. Die radiale Durchgangsöffnung kann ein Gewicht des Gehäuses reduzieren. Zudem kann eine Wartung erleichtert sein. Die Lager können beispielsweise axial abgedichtet ausgebildet sein. Es können auch mehrere Durchgangsöffnungen vorgesehen sein. Die Durchgangsöffnung können je nach struktureller Belastung und Montageerfordernissen gestaltet sein. Das erste und alternativ oder zusätzlich das zweite Teilstück können frei von radialen Durchgangsöffnungen in deren umlaufenden Wänden sein. Dadurch können diese Teilstücke sehr steif sein und beispielsweise Lagerlasten gut aufnehmen. Alternativ können das erste und alternativ oder zusätzlich das zweite Teilstück ebenfalls wenigstens eine radiale Durchgangsöffnung in deren umlaufenden Wänden aufweisen. Dadurch können diese Teilstücke sehr leicht sein und eine Zugänglichkeit für Montage und Wartung in dem Gehäuse verbessert sein.

In einer Ausführungsform der Befestigungsanordnung kann es vorgesehen sein, dass wenigstens eines der jeweiligen Teilstücke einstückig ausgebildet ist. Es können auch mehrere oder alle Teilstücke einstückig ausgebildet sein. Beispielsweise können das erste, zweite und dritte Teilstück jeweils ein einziges Gussteil oder ein einziges Schmiedeteil sein, welches integral gefertigt wurde. Das Gehäuse kann so sehr robust sein.

In einer Ausführungsform der Befestigungsanordnung kann es vorgesehen sein, dass wenigstens zwischen zwei axial benachbarte der jeweiligen Teilstücke ein Passstift vorgesehen ist. Der Passstift kann beispielsweise zwischen zwei Kontaktflächen von den zwei axial benachbarten Teilstücken angeordnet sein. Beispielsweise kann der Passstift zwischen zwei aneinander anliegenden Stirnflächen angeordnet sein. Für den Passstift kann in einem der beiden benachbarten Teilstücke eine Sacklochbohrung oder Durchgangsbohrung vorgesehen sein, in welcher der Passstift wenigstens teilweise aufgenommen ist. Bei einer Durchgangsbohrung kann eine Montage und Demontage einfach sein. Bei einer Sacklochbohrung kann der Passstift besonders sicher gehalten sein. Für den Passstift kann in einem anderem der beiden benachbarten Teilstücke ebenfalls eine Sacklochbohrung oder Durchgangsbohrung vorgesehen sein. Alternativ kann der Passstift dort einstückig mit dem Teilstück ausgebildet sein. Der Passstift kann aber auch ein zu den Teilstücken separates Teil sein. Der Passstift kann beispielsweise eine runde, eckige oder ovale Querschnittsform aufweisen. Es können mehrere in Umfangsrichtung voneinander beabstandet Passstifte vorgesehen sein. Es kann auch zwischen jedem Paar von axial benachbarten Teilstücken wenigstens ein Passstift vorgesehen sein. Sofern drei Teilstücke vorgesehen sind, können beispielsweise jeweils mehrere Passstifte zwischen dem ersten und dritten Teilstück sowie zwischen dem zweiten und dritten Teilstück angeordnet sein. Sofern zwei Teilstücke vorgesehen sind, können beispielsweise mehrere Passstifte zwischen dem ersten und zweiten Teilstück angeordnet sein. Die Befestigungsanordnung kann die jeweiligen Passstifte aufweisen. Die Passstifte können beispielsweise in Umfangsrichtung zwischen jeweiligen Befestigungsmitteln angeordnet sein. Die Passstifte können beispielsweise die Montage erleichtern und zudem einen Kraftschluss in Umfangsrichtung zwischen den Teilstücken verbessern.

In einer Ausführungsform der Befestigungsanordnung kann es vorgesehen sein, dass zwei axial benachbarte der jeweiligen Teilstücke zueinander korrespondierende Kontaktseiten mit einem Absatz für eine Zentrierung der zwei benachbarten Teilstücke zueinander ausbilden. Die Kontaktflächen können beispielsweise zueinander zugewandte Stirnflächen aufweisen. Eines der beiden zwei benachbarten Teilstücke kann dann einen axialen oder auch sich quer erstreckenden Vorsprung aufweisen, welcher in einer korrespondierenden axiale Ausnehmung des anderen der beiden Teilstücke angeordnet ist. Der Vorsprung kann aber auch einfach eine Außenkante oder Innenkante des anderen Teilstücks übergreifen, ohne dass dort eine korrespondierende Ausnehmung vorgesehen ist. Der Absatz kann beispielsweise als Stufe ausgebildet sein. Der Absatz sowie jeweilige Vorsprünge und Ausnehmungen können sich entlang eines gesamten Umfangs des jeweiligen Teilstücks erstrecken oder auch nur bereichsweise. Eine Zentrierung kann bei einer koaxialen Ausrichtung für eine Montage helfen. Der Absatz kann auch eines der Teilstücke für eine Montage abstützen. Der Absatz kann radial näher zu einem Außenumfang als zu einem Innenumfang einer umlaufenden Wand angeordnet sein. Der Absatz kann radial näher zu einem Innenumfang als zu einem Außenumfang einer umlaufenden Wand angeordnet sein. Der Absatz kann radial innen oder radial außen zu Befestigungsmitteln und alternativ oder zusätzlich Passstiften zwischen den beiden Teilstücken angeordnet sein. Es können mehrere Absätze bei den beiden benachbarten Teilstücken vorgesehen sein. Es kann auch zwischen jedem Paar von axial benachbarten Teilstücken wenigstens ein Absatz an zueinander korrespondierenden Kontaktseiten vorgesehen sein. Sofern drei Teilstücke vorgesehen sind, kann beispielsweise jeweils ein Absatz an den Kontaktflächen von dem ersten und dritten Teilstück sowie an den Kontaktflächen von dem zweiten und dritten Teilstück ausgebildet sein. Die Absätze und Vorsprünge können integral an den jeweiligen Teilstücken ausgebildet sein.

In einer Ausführungsform der Befestigungsanordnung kann es vorgesehen sein, dass wenigstens eines der jeweiligen Teilstücke einen radial vorstehenden Flansch ausbildet, an welchem ein benachbartes Teilstück befestigt ist. Der Flansch kann sich radial nach innen oder außen erstrecken. Der Flansch kann eine Kontaktfläche für das benachbarte Teilstück ausbilden, an welchem dieses Teilstück anliegen kann. Der Flansch kann den Absatz aufweisen. Der Flansch kann sich von einer umlaufenden Wand des jeweiligen Teilstücks radial weg erstrecken und integral mit dieser Wand ausgebildet sein. Der Flansch kann die Montage vereinfachen und beispielsweise eine sonst dünnere umlaufende Wand ermöglichen. Der Flansch kann beispielsweise Durchgangsöffnungen und alternativ oder zusätzlich Sacklochbohrungen für jeweilige Befestigungsmittel und Passstifte ausbilden. Es kann ein korrespondierender radial vorstehender Flansch an dem benachbarten Teilstück ausgebildet sein. Es kann auch bei jedem Paar von axial benachbarten Teilstücken an wenigstens einem Teilstück jedes Paars von axial benachbarten Teilstücken ein radial vorstehender Flansch für die Befestigung des anderen Teilstücks jedes Paars von axial benachbarten Teilstücken ausgebildet sein. Der Flansch kann integral an dem jeweiligen Teilstück ausgebildet sein. Der Flansch kann sich entlang eines gesamten Umfangs des jeweiligen Teilstücks erstrecken oder auch nur bereichsweise. Der Flansch kann den Absatz aufweisen oder dazu radial innen oder außen angeordnet sein.

In einer Ausführungsform der Befestigungsanordnung kann es vorgesehen sein, dass zwei axial benachbarte der jeweiligen Teilstücke durch ein zugeordnetes Befestigungsmittel aneinander befestigt sind. Beispielsweise kann das Befestigungsmittel als Schraube, Bolzen oder Niet ausgebildet sein. Sofern das Befestigungsmittel als Schraube ausgebildet ist, kann dieses in einem Innengewinde eingeschraubt sein oder in einer Durchgangsöffnung durch eine Mutter gesichert sein. An jedem der zwei benachbarten Teilstücke kann pro Befestigungsmittel eine Durchgangsöffnung, optional mit Innengewinde, oder eine Sacklochbohrung mit Innengewinde vorgesehen sein. Es können mehrere in Umfangsrichtung voneinander beabstandete Befestigungsmittel vorgesehen sein. Es kann auch für jedes Paar von axial benachbarten Teilstücken wenigstens ein Befestigungsmittel vorgesehen sein. Sofern drei Teilstücke vorgesehen sind, können beispielsweise das erste und dritte Teilstück mit mehreren Befestigungsmitteln aneinander befestigt sein, sowie das zweite und dritte Teilstück mit mehreren Befestigungsmitteln aneinander befestigt sein. Sofern zwei Teilstücke vorgesehen sind, können das erste und zweite Teilstück durch mehrere Befestigungsmittel aneinander befestigt sein. Die Befestigungsanordnung kann die jeweiligen Befestigungsmittel aufweisen. Die Befestigungsmittel können beispielsweise in Umfangsrichtung zwischen jeweiligen Passstiften angeordnet sein. Die Befestigungsmittel können alternativ oder zusätzlich auch auf einem anderen Radius als die Passstifte angeordnet sein.

In einer Ausführungsform der Befestigungsanordnung kann es vorgesehen sein, dass sich das Befestigungsmittel parallel zu der Rotorwelle erstreckt. Beispielsweise kann eine Längserstreckung einer Schraube, eines Bolzens oder eines Niets parallel zu der Drehachse der Rotorwelle sein. Dadurch kann die Befestigung beispielsweise gut im Betrieb auftretenden Lasten widerstehen. Sofern mehrere Befestigungsmittel zwei Teilstücke verbinden, kann eines, mehrere oder alle dieser Befestigungsmittel parallel zu der Rotorwelle ausgerichtet sein. Sofern drei Teilstücke vorgesehen sind, kann sich nur eines, mehrere oder alle der Befestigungsmittel zwischen einem Paar von benachbarten Teilstücken parallel zu der Rotorwelle erstrecken oder auch von mehreren oder allen Paaren von benachbarten Teilstücken.

In einer Ausführungsform der Befestigungsanordnung kann es vorgesehen sein, dass sich das Befestigungsmittel zu der Rotorwelle radial nach innen oder außen geneigt erstreckt. Dadurch kann das Befestigungsmittel einfach zugänglich sein, beispielsweise für eine Montage oder Demontage. Beispielsweise kann die Längserstreckung der Schraube, des Bolzens oder des Niets geneigt zu der Drehachse der Rotorwelle sein. Das Befestigungsmittel kann sich mit der Rotorwelle in einer Ebene erstrecken oder auch quer dazu. Sofern mehrere Befestigungsmittel zwei Teilstücke verbinden, kann eines, mehrere oder alle dieser Befestigungsmittel radial zu der Rotorwelle geneigt sein. Sofern drei Teilstücke vorgesehen sind, kann sich nur eines, mehrere oder alle der Befestigungsmittel zwischen einem Paar von benachbarten Teilstücken radial zu der Rotorwelle geneigt erstrecken oder auch von mehreren oder allen Paaren von benachbarten Teilstücken.

In einer Ausführungsform der Befestigungsanordnung kann es vorgesehen sein, dass das Befestigungsmittel innen oder außen zugänglich an dem Gehäuse angeordnet ist. Bei einer inneren Zugänglichkeit ist beispielsweise ein Schraubknopf innerhalb des Gehäuses für die Montage und Demontage zugänglich. Dafür kann ein Monteur in das Gehäuse steigen, ein Werkzeug axial eingeführt werden oder auch eine radiale Durchgangsöffnung in einer umlaufenden Wand eines der Teilstücke genutzt werden. Die Gondel kann dann sehr kompakt sein. Bei einer äußeren Zugänglichkeit ist beispielsweise ein Schraubknopf außerhalb des Gehäuses für die Montage und Demontage zugänglich. Beispielsweise kann ein Befestigungsmittel an einem radial nach außen ragendem Flansch außen zugänglich sein und ein Befestigungsmittel an einem radial nach innen ragendem Flansch innen zugänglich sein. Es können alle Befestigungsmittel entweder außen oder innen zugänglich sein. Es können auch einige Befestigungsmittel innen und einige Befestigungsmittel außen zugänglich sein. Beispielsweise können die Befestigungsmittel für das Befestigen des ersten Teilstücks an dem dritten Teilstück innen zugänglich sein und die Befestigungsmittel für das Befestigen des zweiten Teilstücks an dem dritten Teilstück außen zugänglich sein.

In einer Ausführungsform der Befestigungsanordnung kann es vorgesehen sein, dass die Befestigungsanordnung den Antriebsstrang aufweist. In einer Ausführungsform der Befestigungsanordnung kann es vorgesehen sein, dass wenigstens zwei benachbarte der Teilstücke abgedichtet sind. Beispielsweise kann zwischen jeweiligen Kontaktflächen ein O-Ring vorgesehen sein. Beispielsweise kann zwischen dem ersten Teilstück und dem dritten Teilstück sowie zwischen dem zweiten Teilstück und dem dritten Teilstück eine Dichtung, wie eine Labyrinthdichtung oder ein O-Ring, vorgesehen sein. Es kann aber auch nur eine Dichtung an der Verbindung von dem ersten oder dem zweiten Teilstück mit dem dritten Teilstück vorgesehen sein.

Ein zweiter Aspekt betrifft eine Windkraftanlage, welche die Befestigungsanordnung gemäß dem ersten Aspekt aufweist. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage kann den Turm, die Gondel und den Antriebsstrang aufweisen. Der Antriebsstrang kann mittels der Befestigungsanordnung an der Gondel befestigt sein.

### Kurze Beschreibung der Figuren

Fig. 1 veranschaulicht schematisch eine Windkraftanlage mit einem Antriebsstrang.
Fig. 2 veranschaulicht schematisch in einer Schnittansicht eine Befestigungsanordnung für den Antriebsstrang mit einem einstückig ausgebildeten Gehäuse.
Fig. 3 veranschaulicht schematisch in einer Seitenansicht eine erste Ausführungsform der Befestigungsanordnung mit einem mehrteiligen Gehäuse, welches bei der ersten Ausführungsform zweifach axial geschnitten ist.
Fig. 4 veranschaulicht schematisch in einer Schnittansicht eine zweite Ausführungsform der Befestigungsanordnung.
Fig. 5 veranschaulicht schematisch in einer Schnittansicht eine dritte Ausführungsform der Befestigungsanordnung.
Fig. 6 veranschaulicht schematisch in einer Schnittansicht eine vierte Ausführungsform der Befestigungsanordnung.
Fig. 7 veranschaulicht schematisch in einer Schnittansicht eine fünfte Ausführungsform der Befestigungsanordnung.
Fig. 8 veranschaulicht schematisch in einer Schnittansicht eine sechste Ausführungsform der Befestigungsanordnung.
Fig. 9 veranschaulicht schematisch in einer Schnittansicht eine siebte Ausführungsform der Befestigungsanordnung.
Fig. 10 veranschaulicht schematisch in einer Schnittansicht eine achte Ausführungsform der Befestigungsanordnung.
Fig. 11 veranschaulicht schematisch in einer Schnittansicht eine neunt Ausführungsform der Befestigungsanordnung.
Fig. 12 veranschaulicht schematisch in einer Schnittansicht eine zehnte Ausführungsform der Befestigungsanordnung, bei welcher das mehrteilige Gehäuse axial nur einfach geteilt ausgebildet ist.
Fig. 13 veranschaulicht schematisch in einer Schnittansicht eine elfte Ausführungsform der Befestigungsanordnung, bei welcher das mehrteilige Gehäuse ebenfalls axial nur einfach geteilt ausgebildet ist.
Fig. 14 veranschaulicht schematisch in einer Schnittansicht eine zwölfte Ausführungsform der Befestigungsanordnung.
Fig. 15 veranschaulicht schematisch in einer Schnittansicht eine dreizehnte Ausführungsform der Befestigungsanordnung.
Fig. 16 veranschaulicht schematisch in einer Schnittansicht Details der dreizehnten Ausführungsform der Befestigungsanordnung.
Fig. 17 veranschaulicht schematisch in einer Schnittansicht eine vierzehnte Ausführungsform der Befestigungsanordnung.
Fig. 18 veranschaulicht schematisch in einer Schnittansicht eine fünfzehnte Ausführungsform der Befestigungsanordnung.
Fig. 19 veranschaulicht schematisch in einer Seitenansicht eine erste Variante eines axial mittleren Teilstücks des zweifach axial geteilten Gehäuses.
Fig. 20 veranschaulicht schematisch in einer Seitenansicht eine zweite Variante des axial mittleren Teilstücks des zweifach axial geteilten Gehäuses.
Fig. 21 veranschaulicht schematisch in einer Seitenansicht eine dritte Variante des axial mittleren Teilstücks des zweifach axial geteilten Gehäuses.
Fig. 22 veranschaulicht schematisch in einer Seitenansicht eine vierte Variante des axial mittleren Teilstücks des zweifach axial geteilten Gehäuses.

### Detaillierte Beschreibung von Ausführungsformen

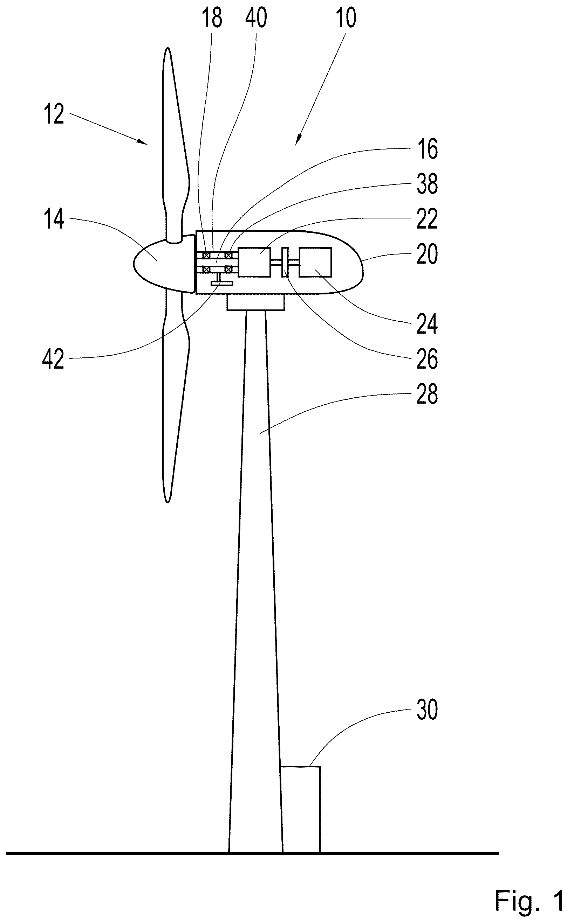

Fig. 1 veranschaulicht eine Windkraftanlage 10 mit einem Antriebsstrang in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18, 38 in einer Gondel 20 gelagert. Dafür ist ein Gehäuse 40 vorgesehen, welches an einem Maschinenbett 42 der Gondel 20 befestigt ist. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 einen Netzanschluss 30 auf. Ein erstes der Wälzlager 18 ist dem Rotor 12 zugewandt und wird auch als rotorseitiges Lager 18 bezeichnet. Ein zweites der Wälzlager 38 ist dem Generator 24 zugewandt und wird auch als generatorseitiges Lager 38 bezeichnet. Die beiden Wälzlager 18, 38 sind hier als Kegelrollenlager ausgebildet.

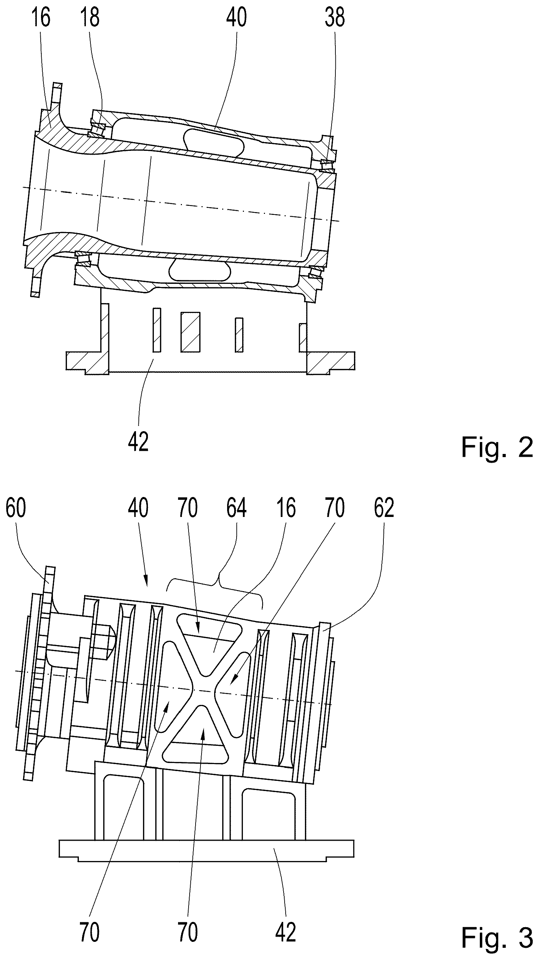

Fig. 2 veranschaulicht eine Befestigungsanordnung zum Befestigen des Antriebsstrangs an dem Maschinenbett 42 mittels des Gehäuses 40 in einer Schnittansicht. Das Gehäuse 40 ist hier einstückig ausgebildet.

Fig. 3 veranschaulicht eine erste Ausführungsform der Befestigungsanordnung zum Befestigen des Antriebsstrangs an dem Maschinenbett 42 mittels des Gehäuses 40 in einer Seitenansicht. Das Gehäuse 40 ist hier zweifach axial geschnitten ausgebildet. Ein erstes Teilstück 60 bildet einen rotorseitigen Endbereich des Gehäuses 40 aus, in welchem das erste Wälzlager 18 angeordnet ist. Ein zweites Teilstück 62 bildet einen generatorseitigen Endbereich des Gehäuses 40 aus, in welchem das zweite Wälzlager 38 angeordnet ist. Axial dazwischen ist ein drittes Teilstück 64 angeordnet, welches ein mittleres Teilstück ausbildet, über welches das erste und zweite Teilstück 60, 62 miteinander verbunden sind. In dem dritten Teilstück 64 ist die Befestigungsanordnung frei von Lagern für die Rotorwelle 16. Das dritte Teilstück 64 weist in seiner umlaufenden Wand eine Vielzahl von radialen Durchgangsöffnungen 70 auf. Das erste und zweite Teilstück 60, 62 sind frei von radialen Durchgangsöffnungen 70 in deren umlaufenden Wänden. Das erste Teilstück 60 und das dritte Teilstück 64 liegen mit einander zugewandten Stirnseiten als Kontaktflächen aufeinander auf und sind dort miteinander befestigt. Das erste Teilstück 60 und das dritte Teilstück 64 bilden ein erstes Paar von axial benachbarten Teilstücken 60, 64 des Gehäuses 40. Das zweite Teilstück 62 und das dritte Teilstück 64 liegen mit einander zugewandten Stirnseiten als Kontaktflächen aufeinander auf und sind dort miteinander befestigt. Das zweite Teilstück 62 und das dritte Teilstück 64 bilden ein zweites Paar von axial benachbarten Teilstücken 64, 62 des Gehäuses 40. Die drei Teilstücke 60, 62, 64 sind jeweils einstückig ausgebildet.

Das erste Teilstück 60 und das zweite Teilstück 62 sind jeweils mit dem dritten Teilstück 64 durch in Umfangsrichtung voneinander beabstandete Befestigungsmittel in Form von Schrauben aneinander befestigt. Alternativ oder zusätzlich sind noch Passstifte zwischen jedem Paar von benachbarten Teilstücken 60, 64; 64, 62 des Gehäuses 40 vorgesehen. Sofern vorgesehen, sind die Passstifte hier in Umfangsrichtung zwischen Befestigungsmitteln angeordnet. In den hier gezeigten Beispielen sind pro Paar von benachbarten Teilstücken des Gehäuses 40 mindestens zwei Passstifte vorgesehen. Die Passstifte und Befestigungsmittel sind in den Schnittansichten der Ausführungsformen nicht dargestellt. Dargestellt sind lediglich Durchgangsöffnungen und Sacklochbohrungen, in welchen die Befestigungsmittel und alternativ oder zusätzlich die Passstifte aufgenommen sind.

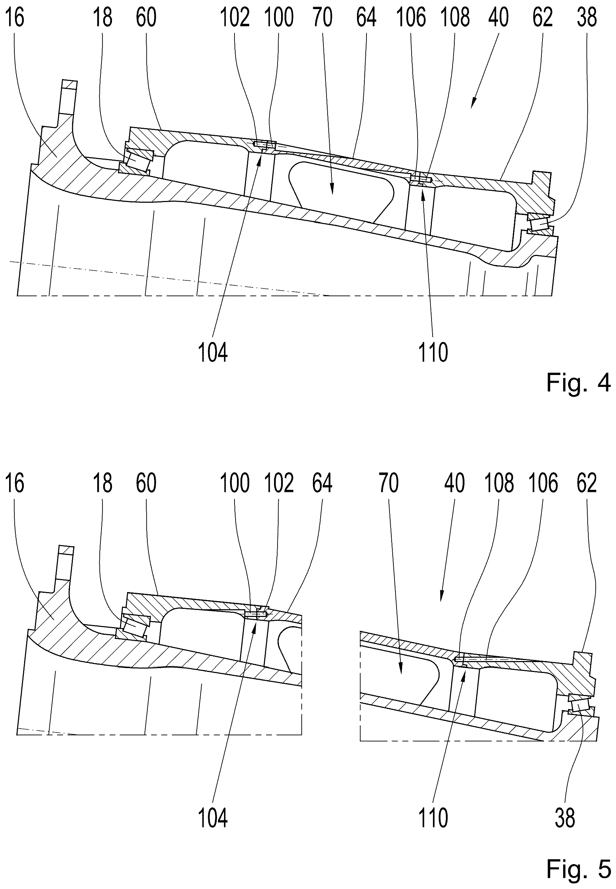

In Fig. 4 sind weitere Details von einer zweiten Ausführungsform in einer Schnittansicht dargestellt. Das dritte Teilstück 64 weist in der Schnittstelle zu dem ersten Teilstück 60 mehrere von außen zugängliche Durchgangsöffnungen 100 auf. Das erste Teilstück 60 weist in der Schnittstelle zu dem dritten Teilstück 64 mehrere Sacklochbohrungen 102 auf, welche mit den Durchgangsöffnungen 100 paarweise fluchten. Sofern in jeweiligen Sacklochbohrungen 102 eine Schraube als Befestigungsmittel angeordnet ist, weisen diese Sacklochbohrungen 102 ein Innengewinde auf. An den Kontaktflächen des ersten Teilstücks 60 und des dritten Teilstücks 64 ist beidseitig ein Absatz 104 vorgesehen, welcher das erste und dritte Teilstück 60, 64 zueinander zentriert. Der Absatz 104 ist radial innen zu den Durchgangsöffnungen 100 und den Sacklochbohrungen 102 angeordnet und erstreckt sich entlang eines gesamten Umfangs.

Das dritte Teilstück 64 weist in der Schnittstelle zu dem zweiten Teilstück 62 mehrere von innen zugängliche Durchgangsöffnungen 106 auf. Das zweite Teilstück 62 weist in der Schnittstelle zu dem dritten Teilstück 64 mehrere Sacklochbohrungen 108 auf, welche mit den Durchgangsöffnungen 106 paarweise fluchten. Sofern in jeweiligen Sacklochbohrungen 108 eine Schraube als Befestigungsmittel angeordnet ist, weisen diese Sacklochbohrungen 108 ein Innengewinde auf. An den Kontaktflächen des zweiten Teilstücks 62 und des dritten Teilstücks 64 ist beidseitig ein Absatz 110 vorgesehen, welcher das zweite und dritte Teilstück 62, 64 zueinander zentriert. Der Absatz 110 ist radial innen zu den Durchgangsöffnungen 106 und den Sacklochbohrungen 108 angeordnet und erstreckt sich entlang eines gesamten Umfangs.

In Fig. 5 sind weitere Details von einer dritten Ausführungsform in einer Schnittansicht dargestellt. Ein axialer Mittelbereich des dritten Teilstücks 64 ist dabei nicht dargestellt. Die Schnittstellen zwischen den Teilstücken 60, 62, 64 sind hier anders gestaltet.

Das erste Teilstück 60 weist in der Schnittstelle zu dem dritten Teilstück 64 mehrere von innen zugängliche Durchgangsöffnungen 100 auf. Das dritte Teilstück 64 weist in der Schnittstelle zu dem ersten Teilstück 60 mehrere Sacklochbohrungen 102 auf, welche mit den Durchgangsöffnungen 100 paarweise fluchten. An den Kontaktflächen des ersten Teilstücks 60 und des dritten Teilstücks 64 ist beidseitig ein Absatz 104 vorgesehen, welcher das erste und dritte Teilstück 60, 64 zueinander zentriert. Der Absatz 104 ist radial außen zu den Durchgangsöffnungen 100 und den Sacklochbohrungen 102 angeordnet.

Das zweite Teilstück 62 weist in der Schnittstelle zu dem dritten Teilstück 64 mehrere von außen zugängliche Durchgangsöffnungen 106 auf. Das dritte Teilstück 64 weist in der Schnittstelle zu dem zweiten Teilstück 62 mehrere Sacklochbohrungen 108 auf, welche mit den Durchgangsöffnungen 106 paarweise fluchten. An den Kontaktflächen des zweiten Teilstücks 62 und des dritten Teilstücks 64 ist beidseitig ein Absatz 110 vorgesehen, welcher das zweite und dritte Teilstück 62, 64 zueinander zentriert. Der Absatz 110 ist radial innen zu den Durchgangsöffnungen 106 und den Sacklochbohrungen 108 angeordnet.

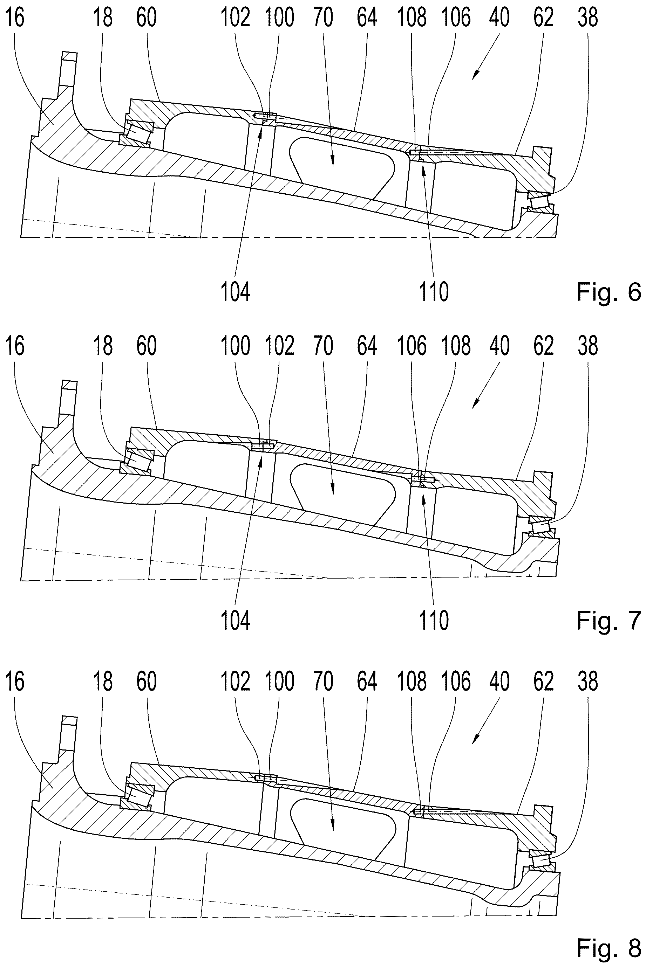

In Fig. 6 sind weitere Details von einer vierten Ausführungsform in einer Schnittansicht dargestellt. Die Schnittstellen zwischen den Teilstücken 60, 62, 64 sind hier ebenfalls anders gestaltet. Die Schnittstelle zwischen dem ersten Teilstück 60 und dem dritten Teilstück 64 ist wie bei der ersten Ausführungsform gestaltet. Die Schnittstelle zwischen dem zweiten Teilstück 62 und dem dritten Teilstück 64 ist wie bei der zweiten Ausführungsform gestaltet.

In Fig. 7 sind weitere Details von einer fünften Ausführungsform in einer Schnittansicht dargestellt. Die Schnittstellen zwischen den Teilstücken 60, 62, 64 sind hier ebenfalls anders gestaltet. Die Schnittstelle zwischen dem ersten Teilstück 60 und dem dritten Teilstück 64 ist wie bei der zweiten Ausführungsform gestaltet. Die Schnittstelle zwischen dem zweiten Teilstück 62 und dem dritten Teilstück 64 ist wie bei der ersten Ausführungsform gestaltet.

In Fig. 8 sind weitere Details von einer sechsten Ausführungsform in einer Schnittansicht dargestellt. Die Schnittstellen zwischen den Teilstücken 60, 62, 64 sind hier ebenfalls anders gestaltet. Diese sind wie bei der vierten Ausführungsform ausgebildet, wobei jedoch die Absätze 104, 110 entfallen. Stattdessen erstrecken sich die Kontaktflächen hier rein radial als ebene Stirnflächen.

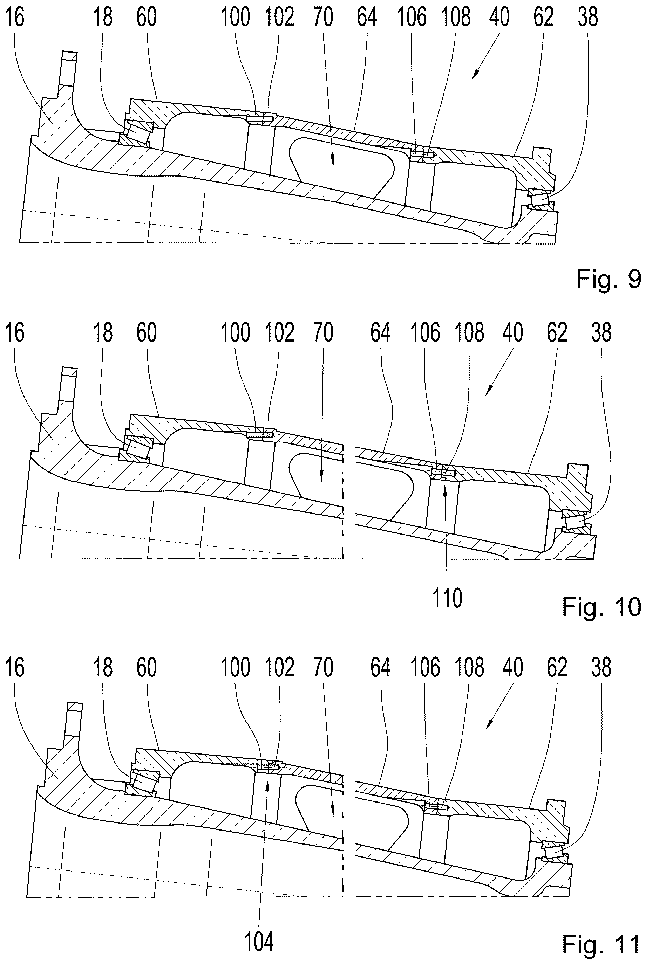

In Fig. 9 sind weitere Details von einer siebten Ausführungsform in einer Schnittansicht dargestellt. Die Schnittstellen zwischen den Teilstücken 60, 62, 64 sind hier ebenfalls anders gestaltet. Diese sind wie bei der fünften Ausführungsform ausgebildet, wobei jedoch die Absätze 104, 110 entfallen. Stattdessen erstrecken sich die Kontaktflächen hier rein radial als ebene Stirnflächen.

In Fig. 10 sind weitere Details von einer achten Ausführungsform in einer Schnittansicht dargestellt. Ein axialer Mittelbereich des dritten Teilstücks 64 ist dabei nicht dargestellt, wie bei Fig. 5. Die Schnittstellen zwischen den Teilstücken 60, 62, 64 sind hier ebenfalls anders gestaltet. Diese sind wie bei der fünften Ausführungsform ausgebildet, wobei nur der Absatz 104 zwischen dem ersten Teilstück 60 und dem dritten Teilstück 64 entfällt. Stattdessen erstreckt sich die Kontaktfläche hier rein radial als ebene Stirnflächen.

In Fig. 11 sind weitere Details von einer neunten Ausführungsform in einer Schnittansicht dargestellt. Ein axialer Mittelbereich des dritten Teilstücks 64 ist dabei nicht dargestellt, wie bei Fig. 5. Die Schnittstellen zwischen den Teilstücken 60, 62, 64 sind hier ebenfalls anders gestaltet. Diese sind wie bei der fünften Ausführungsform ausgebildet, wobei nur der Absatz 110 zwischen dem zweiten Teilstück 62 und dem dritten Teilstück 64 entfällt. Stattdessen erstreckt sich die Kontaktfläche hier rein radial als ebene Stirnflächen.

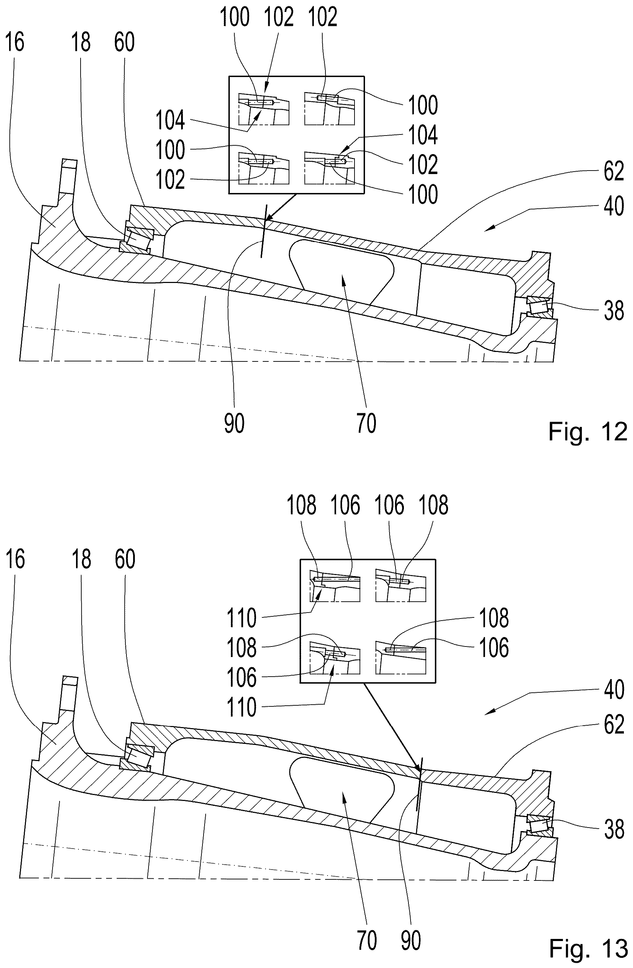

In Fig. 12 ist eine zehnte Ausführungsform der Befestigungsanordnung gezeigt, bei welcher das Gehäuse 40 nur einfach axial geteilt ist. Die Teilungsstelle und damit Schnittstelle zwischen einem ersten Teilstück 60 und einem zweiten Teilstück 62 ist durch Strich 90 veranschaulicht. Die Schnittstelle befindet sich an der axialen Stelle, bei welcher bei den vorherigen Ausführungsformen die Schnittstelle des ersten Teilstücks 60 und dem dritten Teilstück 64 war. Das erste Teilstück 60 bildet weiter den rotorseitigen Endbereich aus und das zweite Teilstück 62 den generatorseitigen Teilbereich. Beide Teilstücke 60, 62 sind einstückig ausgebildet. Das dritte Teilstück 64 entfällt und ist nun Teil des zweiten Teilstücks 62. Das zweite Teilstück 62 weist demnach nun in seiner umlaufenden Wand die radialen Durchgangsöffnungen 70 auf. Die Schnittstelle zwischen dem ersten Teilstück 60 und dem zweiten Teilstück 62 ist wie bei einer den vorherigen Ausführungsformen gestaltet, was oberhalb des Strichs 90 veranschaulicht ist.

In Fig. 13 ist eine elfte Ausführungsform der Befestigungsanordnung gezeigt, bei welcher das Gehäuse 40 ebenfalls nur einfach axial geteilt ist. Die Teilungsstelle und damit Schnittstelle zwischen einem ersten Teilstück 60 und einem zweiten Teilstück 62 ist durch Strich 90 veranschaulicht. Die Schnittstelle befindet sich an der axialen Stelle, bei welcher bei den vorherigen Ausführungsformen die Schnittstelle des zweiten Teilstücks 62 und des dritten Teilstücks 64 war. Das erste Teilstück 60 bildet weiter den rotorseitigen Endbereich aus und das zweite Teilstück 62 den generatorseitigen Teilbereich. Beide Teilstücke 60, 62 sind einstückig ausgebildet. Das dritte Teilstück 64 entfällt und ist nun Teil des ersten Teilstücks 60. Das erste Teilstück 60 weist demnach nun in seiner umlaufenden Wand die radialen Durchgangsöffnungen 70 auf. Die Schnittstelle zwischen dem ersten Teilstück 60 und dem zweiten Teilstück 62 ist wie bei einer den vorherigen Ausführungsformen gestaltet, was oberhalb des Strichs 90 veranschaulicht ist.

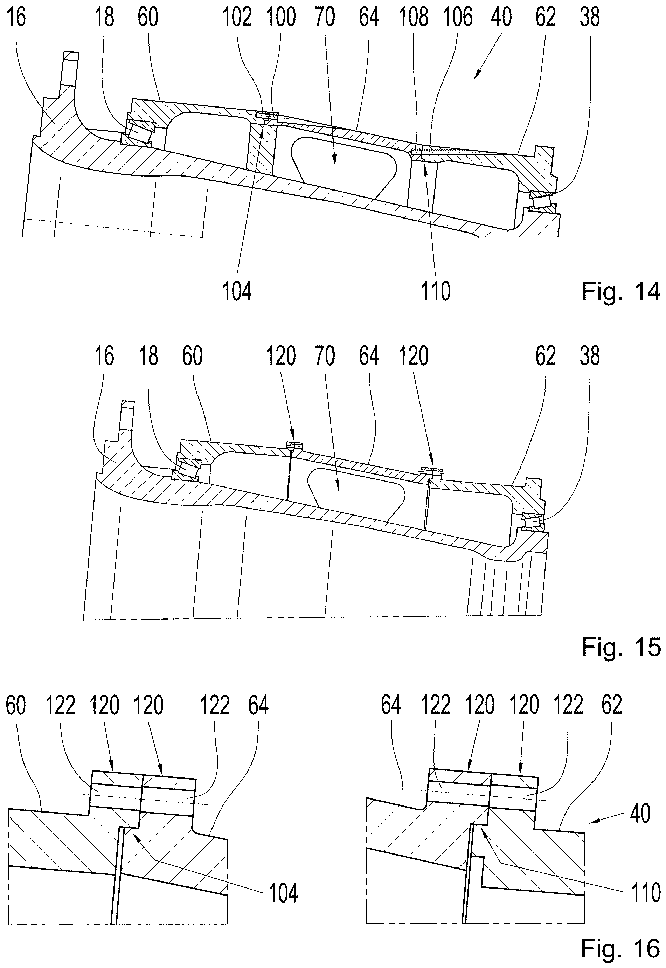

In Fig. 14 ist anhand einer zwölften Ausführungsform der Befestigungsanordnung gezeigt, dass die Ausrichtung der Durchgangsöffnungen 100, 106 und Sacklochbohrungen 102, 108 parallel oder geneigt zu der Rotorwelle 16 ist. Entsprechend ergibt sich auch eine parallele oder geneigte Erstreckung der Befestigungsmittel. Rein zur Veranschaulichung ist hier die Schnittstelle zwischen dem ersten Teilstück 60 und dem dritten Teilstück 64 für eine parallele Erstreckung der Befestigungsmittel zu einer Drehachse der Rotorwelle 16 veranschaulicht. Damit erstrecken sich auch jeweilige Längsachsen der Durchgangsöffnung 100 und der Sacklochbohrung 102 parallel zu der Drehachse der Rotorwelle 16. Rein zur Veranschaulichung ist hier die Schnittstelle zwischen dem zweiten Teilstück 62 und dem dritten Teilstück 64 für eine Erstreckung der Befestigungsmittel radial geneigt zu einer Drehachse der Rotorwelle 16 veranschaulicht. Damit erstrecken sich jeweilige Längsachsen der Durchgangsöffnung 106 und der Sacklochbohrung 108 in einer Ebene mit der Drehachse der Rotorwelle 16 aber quer zu dieser. In anderen Ausführungsformen ist die Ausrichtung der beiden Schnittstellen vertauscht oder beide Schnittstellen sind für eine parallele oder radial geneigte Ausrichtung der Befestigungsmittel ausgebildet.

In Fig. 15 ist eine dreizehnte Ausführungsform der Befestigungsanordnung in einer Schnittansicht dargestellt, bei welcher das Gehäuse 40 wieder zweifach axial geteilt ist. Die Schnittstellen zwischen den Teilstücken 60, 62, 64 sind hier ebenfalls anders gestaltet. Bei der dreizehnten Ausführungsform weist jedes Teilstück 60, 62, 64 an den Schnittstellen einen sich radial nach außen von der umlaufenden Wand wegerstreckenden Flansch 120 auf. Der jeweilige Flansch 120 erstreckt sich in einer Ausführungsform entlang eines gesamten Außenumfangs. In anderen Ausführungsformen erstreckt sich der Flansch 120 nur im Umfangsbereich des jeweils darin angeordneten Befestigungsmittels und alternativ oder zusätzlich des jeweils darin angeordneten Passstifts.

In Fig. 16 sind weitere Details der Schnittstellen zwischen den drei Teilstücken 60, 62, 64 vergrößert dargestellt. Links ist die Schnittstelle zwischen dem ersten Teilstück 60 und dem dritten Teilstück 64 und rechts zwischen dem zweiten Teilstück 62 und dem dritten Teilstück 64 dargestellt. Jeder Flansch 120 bildet eine stirnseitige Anlagefläche für das benachbarte der Teilstücke 60, 62, 64 aus. In dem Flansch 120 ist jeweils mindestens eine Durchgangsöffnung 122 ausgebildet, welche sich parallel zu der Rotorwelle 16 oder radial geneigt dazu in einer Ebene erstreckt. Die paarweise benachbarten Durchgangsöffnungen 122 sind koaxial bzw. fluchtend angeordnet. Als Befestigungsmittel werden in einer Ausführungsform Schrauben genutzt, welche außenseitig in eine Mutter eingreifen. Alternativ weist jeweils eine der Durchgangsöffnungen 122 von einem Paar von benachbarten fluchtenden Durchgangsöffnungen 122 ein Innengewinde auf, in welchem eine Schraube als Befestigungsmittel eingeschraubt ist. Radial innen zu den Durchgangsöffnungen 122 ist jeweils ein Absatz 104 bzw. Absatz 110 ausgebildet. In weiteren Ausführungsformen entfallen einer oder beide dieser Absätze 104, 110. In noch weiteren Ausführungsformen ist bei den Paaren von benachbarten Durchgangsöffnungen 122 eine der Durchgangsöffnungen 122 durch eine Sacklochbohrung 102, 108 mit Innengewinde ersetzt.

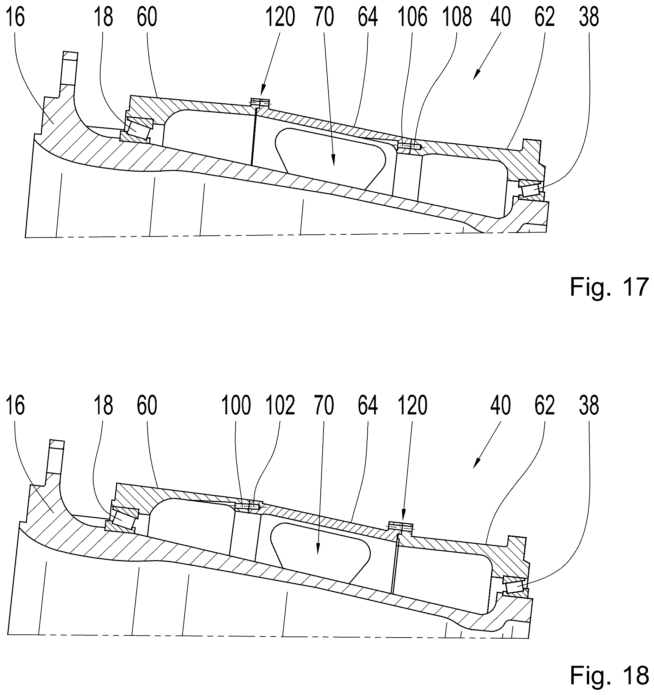

In Fig. 17 ist eine vierzehnte Ausführungsform der Befestigungsanordnung in einer Schnittansicht dargestellt, welche eine Abwandlung der dreizehnten Ausführungsform ist. Bei der vierzehnten Ausführungsform sind nur an der Schnittstelle zwischen dem ersten Teilstück 60 und dem dritten Teilstück 64 Flansche 120 wie bei der dreizehnten Ausführungsform vorgesehen. Die Schnittstelle zwischen dem zweiten Teilstück 62 und dem dritten Teilstück 64 ist wie bei der siebten Ausführungsform von Fig. 9 gestaltet. In anderen Ausführungsformen ist die Schnittstelle zwischen dem zweiten Teilstück 62 und dem dritten Teilstück 64 wie bei einer der anderen Ausführungsformen mit zweifacher axialer Teilung des Gehäuses 40 und ohne Flansch 120 gestaltet.

In Fig. 18 ist eine fünfzehnte Ausführungsform der Befestigungsanordnung in einer Schnittansicht dargestellt, welche eine Abwandlung der dreizehnten Ausführungsform ist. Bei der fünfzehnten Ausführungsform sind nur an der Schnittstelle zwischen dem zweiten Teilstück 62 und dem dritten Teilstück 64 Flansche 120 wie bei der dreizehnten Ausführungsform vorgesehen. Die Schnittstelle zwischen dem ersten Teilstück 60 und dem dritten Teilstück 64 ist wie bei der siebten Ausführungsform von Fig. 9 gestaltet. In anderen Ausführungsformen ist die Schnittstelle zwischen dem zweiten Teilstück 62 und dem dritten Teilstück 64 wie bei einer der anderen Ausführungsformen mit zweifacher axialer Teilung des Gehäuses 40 und ohne Flansch 120 gestaltet.

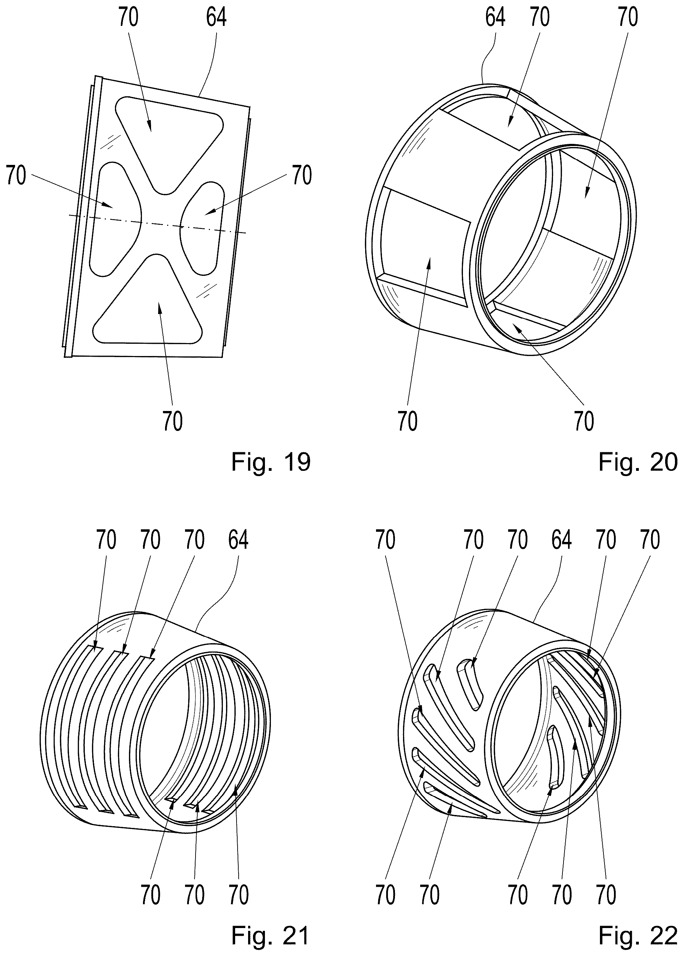

In den Figs. 19 bis 22 sind verschiedene Gestaltungen des dritten Teilstücks 64 gezeigt, welche mit allen axial zweifach geteilten Ausführungsformen des Gehäuses 40 kompatibel sind. In Fig. 19 ist die Gestaltung des dritten Teilstücks 64 mit vier radialen Durchgangsöffnungen 70 beidseitig in einer horizontalen Erstreckung neben der Rotorwelle 16 gezeigt. Die radialen Durchgangsöffnungen 70 sind nicht gleichförmig gestaltet und weisen eine dreieckige Grundform mit gerundeten Ecken auf. In Fig. 20 ist eine Variante mit vier rechteckigen radialen Durchgangsöffnungen 70 gezeigt, welche sich axial zwischen den beiden Schnittstellen mit den anderen Teilstücken 60, 62 erstrecken. In Fig. 21 ist eine Variante gezeigt, bei welcher beidseitig in einer horizontalen Erstreckung neben der Rotorwelle 16 sich in Umfangsrichtung erstreckende rechteckige und schlitzförmige radiale Durchgangsöffnungen 70 nebeneinander zwischen den beiden Schnittstellen mit den anderen Teilstücken 60, 62 angeordnet sind. Oberseitig und unterseitig ist das Gehäuse 40 massiv ausgebildet. In Fig. 22 ist eine Abwandlung davon gezeigt, bei welcher die Durchgangsöffnungen 70 geneigt und damit sowohl in Umfangsrichtung als auch Axialrichtung mit deren Längserstreckung erstrecken.

In weiteren Ausführungsformen des einfach axial geteilten Gehäuses 40 sind die radialen Durchgangsöffnungen 70 in dem ersten Teilstück 60 oder dem zweiten Teilstück 62 nicht wie in Fig. 13 oder Fig. 12 gestaltet, sondern wie bei dem dritten Teilstück 64 gemäß einer der Varianten von Fig. 20 bis 22.

### Bezugszeichen

- 10: Windkraftanlage
- 12: Rotor
- 14: Nabe
- 16: Rotorwelle
- 18: erstes Wälzlager
- 20: Gondel
- 22: Getriebe
- 24: Generator
- 26: Bremse
- 28: Turm
- 30: Netzanschluss
- 38: zweites Wälzlager
- 40: Gehäuse
- 42: Maschinenbett
- 60: erstes Teilstück
- 62: zweites Teilstück
- 64: drittes Teilstück
- 70: radiale Durchgangsöffnungen
- 90: Strich
- 100, 106, 122: Durchgangsöffnung
- 102, 108: Sacklochbohrung
- 104, 110: Absatz
- 120: Flansch

## Patentansprüche

1. Befestigungsanordnung zum Befestigen eines Antriebsstrangs an einer Windkraftanlage (10), wobei die Befestigungsanordnung ein Gehäuse (40) aufweist, in welchem wenigstens ein Lager zum drehbaren Lagern einer Rotorwelle (16) der Windkraftanlage (10) befestigbar ist und welches zum Befestigen an einer Gondel (20) der Windkraftanlage (10) ausgebildet ist, wobei das Gehäuse (40) wenigstens einfach axial geteilt ausgebildet ist und das Gehäuse (40) ein erstes Teilstück (60) und ein zweites Teilstück (62) aufweist, welche aneinander befestigt sind.

2. Befestigungsanordnung nach Anspruch 1, **dadurch gekennzeichnet, dass** der Antriebsstrang ausschließlich über das Gehäuse (40) an der Gondel (20) der Windkraftanlage (10) gehalten ist.

3. Befestigungsanordnung nach Anspruch 1 oder 2, **dadurch gekennzeichnet, dass** das Gehäuse (40) wenigstens zweifach axial geteilt ausgebildet ist und das Gehäuse (40) zusätzlich ein drittes Teilstück (64) ausbildet, über welches das erste Teilstück (60) an dem zweiten Teilstück (62) befestigt ist.

4. Befestigungsanordnung nach Anspruch 3, **dadurch gekennzeichnet, dass** das dritte Teilstück (64) in seiner umlaufenden Wand wenigstens eine radiale Durchgangsöffnung (70) aufweist.

5. Befestigungsanordnung nach einem der vorhergehenden Ansprüche, **dadurch gekennzeichnet, dass** wenigstens eines der jeweiligen Teilstücke (60, 62, 64) einstückig ausgebildet ist.

6. Befestigungsanordnung nach einem der vorhergehenden Ansprüche, **dadurch gekennzeichnet, dass** wenigstens zwischen zwei axial benachbarten der jeweiligen Teilstücke (60, 62, 64) ein Passstift vorgesehen ist.

7. Befestigungsanordnung nach einem der vorhergehenden Ansprüche, **dadurch gekennzeichnet, dass** zwei axial benachbarte der jeweiligen Teilstücke (60, 62, 64) zueinander korrespondierende Kontaktseiten mit einem Absatz (104, 110) für eine Zentrierung der zwei benachbarten Teilstücke (60, 64; 64, 62) zueinander ausbilden.

8. Befestigungsanordnung nach einem der vorhergehenden Ansprüche, **dadurch gekennzeichnet, dass** wenigstens eines der jeweiligen Teilstücke (60, 62, 64) einen radial vorstehenden Flansch (120) ausbildet, an welchem ein benachbartes Teilstück (60, 62, 64) befestigt ist.

9. Befestigungsanordnung nach einem der vorhergehenden Ansprüche, **dadurch gekennzeichnet, dass** zwei axial benachbarte der jeweiligen Teilstücke (60, 62, 64) durch ein zugeordnetes Befestigungsmittel aneinander befestigt sind.

10. Befestigungsanordnung nach Anspruch 9, **dadurch gekennzeichnet, dass** sich das Befestigungsmittel parallel zu der Rotorwelle (16) erstreckt.

11. Befestigungsanordnung nach Anspruch 9, **dadurch gekennzeichnet, dass** sich das Befestigungsmittel zu der Rotorwelle (16) radial nach innen oder außen geneigt erstreckt.

12. Befestigungsanordnung nach einem der Ansprüche 9 bis 11, **dadurch gekennzeichnet, dass** das Befestigungsmittel innen oder außen zugänglich an dem Gehäuse (40) angeordnet ist.

13. Windkraftanlage (10) mit einer Befestigungsanordnung nach einem der vorhergehenden Ansprüche.
